# EUROPEAN PATENT SPECIFICATION

(11) **EP 2 394 816 B1**
(45) Date of publication and mention of the grant of the patent: **17.04.2013**
(21) Application number: 10738235.0
(22) Date of filing: 02.02.2010
(51) Int. Cl.: B41M 5/24, B41M 5/26, B41M 3/14

(54) **PROCEDURE FOR MARKING, ENCRYPTION, LABELLING AND OPTICAL CODING**
VERFAHREN FÜR MARKIERUNG, VERSCHLÜSSELUNG, ETIKETTIERUNG UND OPTISCHE KODIERUNG
PROCÉDÉ DE MARQUAGE, DE CHIFFREMENT, D'ÉTIQUETAGE ET DE CODAGE OPTIQUE

(30) Priority: 04.02.2009 ES 200900310
(43) Date of publication of application: 14.12.2011
(73) Proprietor: Consejo Superior de Investigaciones Cientificas (CSIC), 28006 Madrid (ES); Universidad Politécnica De Madrid (UPM), 28040 Madrid (ES)
(72) Inventor: BARRANCO QUERO, Ángel, E-41092 Sevilla (ES); RODRÍGUEZ GONZÁLEZ-ELIPE, Agustín, E-41092 Sevilla (ES); SÁNCHEZ VALENCIA, Juan Ramón, E-41092 Sevilla (ES); APARICIO REBOLLO, Francisco Javier, E-41092 Sevilla (ES); BLASZCZYK-LEZAK, Iwona Krystina, E-41092 Sevilla (ES); HOLGADO BOLAÑOS, Miguel, E-28040 Madrid (ES); CASQUEL DEL CAMPO, Rafael, E-28040 Madrid (ES); OCAÑA MORENO, José Luis, E-28040 Madrid (ES); MOLPECERES ÁLVAREZ, Carlos, E-28040 Madrid (ES); GARCÍA-BALLESTEROS RAMÍREZ, Juan José, E-28040 Madrid (ES); MORALES FURIÓ, Miguel, E-28040 Madrid (ES)
(74) Representative: Pons Ariño, Angel
(86) International application number: PCT/ES2010/070054
(87) International publication number: WO 2010/089439

(56) References cited:
- WO-A1-2005/108076
- WO-A2-2007/096461
- US-A- 6 105 501
- US-B1- 6 374 737

## Description

### OBJECT OF THE INVENTION

The field of application of the present invention falls within the field of Engineering, Physics and Materials, specifically within the marking systems, in search for new materials on which to engrave various motifs, as well as in the field of nanotechnology, in the development of new marking, encryption, labelling and object coding on a macroscopic and microscopic scale.

The main object of the present invention is a process for marking or engraving motifs on substrates in surfaces on which a fluorescent polymer layer has been previously deposited through a process of plasma polymerization of dye molecules.

### BACKGROUND OF THE INVENTION

Currently there are a number of processes for marking objects. All of them are based mainly on optical or magnetic detection systems.

In the case of magnetic marking, the mark integrates a series of signals that are detected with a system that is appropriate and sensitive to them. These magnetic marks are incorporated into magnetic tapes or magnetic material chips (magnetic oxides, small ferromagnetic metal particles, etc.) usually embedded in an inert matrix and that are easily recognizable as bands or spots. A major limitation to this type of marking is the limited capacity of simultaneous recognition of more than one marked piece. Another limitation of magnetic marking methods is the impossibility of introducing complex motifs containing a large amount of information.

In the case of optical marking, the systems have a higher discriminating power and can adapt to the external characteristics of the parts to be marked and can even become invisible in the range of vision of the human eye. They also enable miniaturization of information as "chips" and to encrypt the information according to complex information codes.

To date, various ways of marking based on optical methods of detection have been proposed, as it is the use of fluorescent layers, the barcode integration, or the use of pigments or coloured layers among others.

The use of fluorescent layers for marking objects and motifs, which are obtained by sol-gel processes or other chemical methods, adhesive tapes or similar, is known; in these cases motifs are not marked by laser techniques or other processes. These preparation methods limit its use on sensitive substrates such as polymers, paper, etc.

In other cases, visible or invisible fluorescent inks that are applied as such and can scatter light are used, in which case they do not always allow optical detection, so its signal processing capacity is limited and in some cases nonexistent.

In the case of integrating barcodes, they use complex systems prepared by methods other than plasma polymerization and they never use laser technology to engrave information, or to perform motifs by deposition through a mask. The present invention allows the integration of bar codes or other motifs as described below.

In the marking of pigments or coloured layers prepared by methods other than plasma polymerization, different processes were used, in some cases including marking with lasers. However, these processes are not used on fluorescent layers, and they are never used on invisible layers, neither being based on the drawing of designs on coloured layers where the observation refers to the distinction of different colour areas nor on a distinct fluorescence emission according to defined and/or encrypted drawings or patterns.

It should also be noted that, in some cases the use of lasers for reading optical information from coloured / fluorescent layers encrypted and prepared by methods other than polymerization has been suggested, but not for information engraving. At other times, laser is used to alter the chemical and optical characteristics of the layers but not selectively or for engraving processes.

The use of plasma polymerization methods for the manufacture of continuous, coloured and / or fluorescent sheets is known, but no such method that combines said layers with information engraving methods, using either lasers or other methods, has been presented.

WO-A-2005/108 076 teaches a process for ablative marking of lithographic printing plate precursors. The imaging layer is 1 to 20 nm thick and plasma-polymerised.

### DESCRIPTION OF THE INVENTION

The marking, encryption, labelling and optical coding system object of the present invention, makes possible the marking and engraving of motifs on some substrates in which a fluorescent polymer layer has been previously deposited through a process of plasma polymerization of dye molecules. The process combines the special characteristics of the polymer layers that make them suitable for engraving a variety of motifs on them and the possibility of engraving by laser or other techniques. Among such features, the possibility of having a remarkable visual effect even for thicknesses of 100 nm, of using non observable layers when illuminated with visible light, high optical quality (transparency) or the ease with which they can be processed by subsequent treatments, including various laser treatments, should be noted. On these deposited layers several motifs that are of interest for its subsequent recognition can be engraved and they may be motifs or signs of high complexity and with a large amount of information.

The deposition of layers by plasma polymerization has the advantage of being applicable to any type of substrate, moreover, it is particularly suitable for marking sensitive and valuable materials (paper, plastic, etc.) without degrading them as it is a non-destructive method, besides they can also be prepared in one step.

A singular fact of the invention is that it allows the engraving of information with high quality and for the size of very small motifs without damaging the substrate, especially in the case of particularly sensitive materials. This requires, on the one hand, to thoroughly control the conditions of engraving and on the other hand, to work with thin but extraordinarily sensitive layers. Both conditions are met in the methodologies proposed in the present specification of the invention.

A basic feature of this process for obtaining layers by plasma polymerization is that it allows strict control of the degree of interaction of plasma (typically argon, although any other gas could be used) with the dye molecules that evaporate directing them onto the substrate where the layer of nanometer thickness wants to be deposited. This requires a greater control of the deposited layer properties.

The process for marking, labelling and optical coding of the invention allows for obtaining visible or invisible layers by a system of plasma polymerization, which allows at all times an optical detection of the motif engraved, something that doesn't happen in some cases with the use of fluorescent dyes that scatter light. Another radical difference of the process of the present invention with the existing marking methods so far, is that this new marking system allows for multilayer structures that can always be engraved and, therefore, can contain superimposed encrypted information.

The methods that can be used to carry out the marking, encryption, labelling and coding - from now on, marking- of the motifs can be varied. Furthermore, using this new process, multilayer structures that can be selectively engraved separately to obtain various information overlapping engravings, can be obtained.

The fluorescent polymer layers obtained can absorb in the ultraviolet (UV) range and emit fluorescence in the visible range, or alternatively, absorb in the visible and emit fluorescence in the infrared (IR), properties all of which, using this technique, can be obtained for very small layer thicknesses (e.g. 100 nanometers), which makes them invisible to interference or related optical effects when the substrates are flat and / or metallic.

In the case of fluorescent polymer layers that absorb in the UV area and emit in the visible and / or IR, the engraved motifs can be seen in the visible range and /or IR illuminating the layer with ultraviolet light. In this case, the layers are invisible to the human eye and natural light and are only visible when illuminated with UV light by observing the fluorescence emission. In the case of layers that absorb in the visible, the coloured layer usually re-emits light at another wavelength than that of the excitation.

Thus, an objective of the present invention is a method of marking comprising a first stage of fluorescent polymer layer deposition through a process of plasma polymerization of dye molecules, with thicknesses between tens and several hundreds of nanometers, and a second stage of marking the target motif.

A particular objective of the invention is the possibility of controlling the motif to be engraved, which may belong, without limitation, to a group of the following: a barcode, data encryption, a figure or drawing, whether visible or invisible, photonic structures (waveguides, optical resonators, etc.) in the micrometer range, etc.

Another particular objective of the invention is the process of the invention in which the marking method belongs to any of the following: marking by laser using an ablation process through a conventional or diffractive mask, marking using a mask during the process of layer growth, internal marking with laser by focus adjustment and control of the focal point, by selective ablation using a mask, or by lighting with ultraviolet light through a mask, among others.

In the event that the marking is performed by laser, the motifs to be incorporated in the layer can be generated by a computer, Constituting either open or restricted access files, so that the motif to be marked, fixed or variable from one piece to another, follows a particular code that doesn't have to be known even by the manufacturer of the piece or object to be marked. This would allow for an additional protection system that would include even the manufacturer of the objects to be protected.

The motifs engraved in these layers obtained by plasma polymerization may be visible or invisible to the human eye (visible), since the polymer layers can be obtained from dyes that absorb visible light and re-emit in the visible or IR or dyes that absorb in the UV and re-emit in the visible or IR.

Moreover, the size of the motifs and of the layer itself can be macroscopic, indicated for visual observation or microscopic, specially adapted for the manufacture of optical information "chips".

### DESCRIPTION OF THE DRAWINGS

To complement the description being made and in order to help better understand the features of the invention, according to a preferred practical embodiment thereof, a set of drawings is attached as an integral part of said description, wherein the following is shown as way of illustration but not limited to:
Figure 1 .- Shows the process of preparing the fluorescent layer by plasma polymerization.
Figure 2 .- Shows the marking method using a laser ablation process by moving the focal point.
Figure 3 .- Shows the laser marking method using a process of direct projection ablation through a mask.
Figure 4.- Shows the marking method using a diffractive mask.
Figure 5 .- Shows the method of obtaining motifs by laser marking in intermediate layers with focus control.
Figure 6 .- Shows the method of obtaining motifs by selective deposition through a mask.
Figure 7 .- Shows the method of obtaining motifs by selective abrasion through the mask or the formed layer or by irradiation with ultraviolet light through that same mask.
Figure 8 .- Shows the method of obtaining motifs in multilayer structures.
Figure 9 .- Shows absorption and fluorescence spectra of a polymer layer of 3-hydroxyflavone prepared by plasma polymerization, and views of a fluorescent layer with marked motif illuminated with and without ultraviolet light.
Figure 10 .- Shows an image of electron microscopy (SEM) of fluorescent polymer layer of 3-hydroxyflavone scanning.
Figure 11 .- Shows an image of fluorescent confocal optical microscopy of fluorescent layer 3-hydroxyflavone.

### PREFERRED EMBODIMENT OF THE INVENTION

The marking of the motifs can be performed by several procedures among which are those referred to below:

### * Marking by laser ablation.

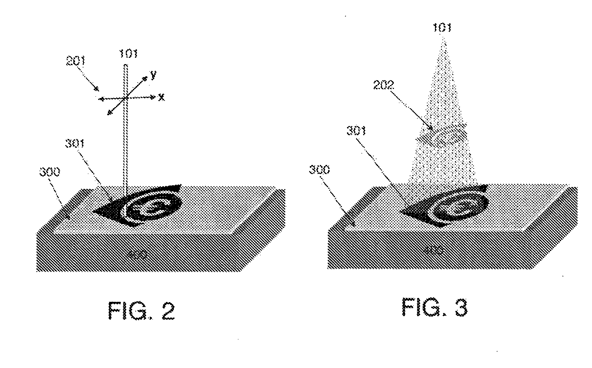

In this case the fluorescent layer (300), once deposited on the corresponding substrate (400) is exposed to a laser (101) (with any source of coherent light from vacuum UV to far IR (157nm-1 mm wavelength). The choice of wavelength will depend on the material and the type of marking required, either laser ablation or passivation of the material to eliminate the fluorescent properties of the layer / layers of dye in the definition of the motifs (301). The execution of motifs (301) may preferably be done by two methods. Either by focal point as shown in Figure 2, in which the sample will be positioned in a bedplate that is controlled by a system of coordinates (201) and whose positioning control allows obtaining the motifs (301) keeping the laser head (101) fixed. Another option is to keep the sample / piece to be marked fixed and being the laser head (101) which moves to define the motifs (301) in question, or by the use of masks (202) as shown in Figure 3, in which the motifs (301) to be engraved in the material have been previously drawn. This mask will be incorporated into the laser optical system (101) and will directly define the motifs (301) without using a positioning system. The definition and manufacture of the motifs (301) of the masks may also be manufactured using laser technology (101). This process allows size reduction of the motifs (301) to be manufactured.

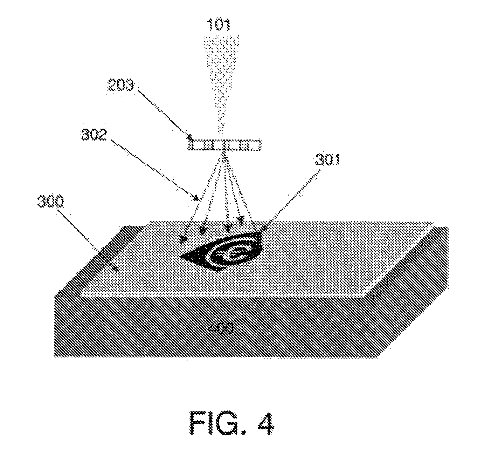

Finally, and facing the encryption of information, diffractive masks (203), whose motifs (301) are not identifiable a priori, can be used , these being visually different from those that appear in the mask that is used, as shown in Figure 4. After being properly adjusted to avoid damaging the substrate (400) and programmed to draw the motif that is deemed appropriate, the laser (101) produces the ablation of the layer in areas where it operates, thus leaving an invisible motif that allows the incorporation of adequate information codes and / or pre designed photonic structures. The size of the motifs (301) may be macroscopic, microscopic, submicron or even nanometer using a laser (101) of appropriate beam size and scanning. In addition, if necessary, the developed structure can subsequently be protected by deposition of a transparent top layer more resistant to abrasion.

### * Laser internal marking

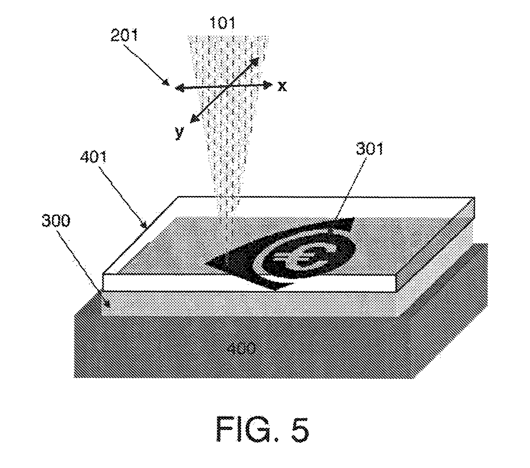

Through this type of marking, shown in Figure 5, the fluorescent layer (300) deposited on the corresponding substrate (400) is exposed to a laser (101) that moves over its surface as explained in the previous section. This laser (101), after being suitably adjusted in depth, allows the internal "writing" of blind motifs (301) that will produce neither absorption nor fluorescence within the rest of the fluorescent layer (300), and also there is no surface ablation of the layer. The fluorescent layer (300) can be protected before or after the marking with laser (101) by deposition of another transparent and resistant to abrasion (401) layer.

### * Selective deposition through masks.

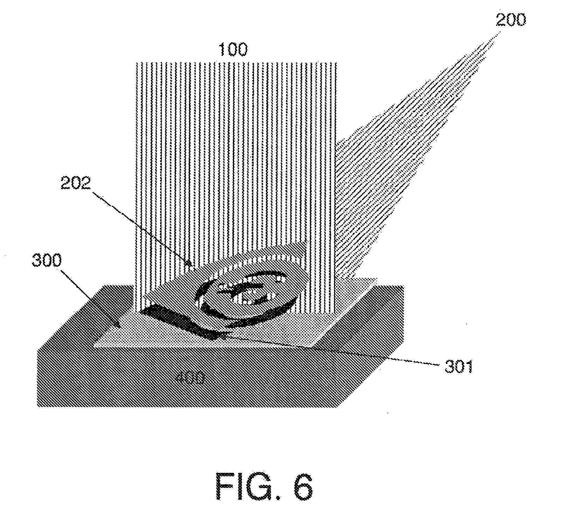

In this case the fluorescent layer (300) is deposited through a mask (202) where the motifs (301) to be built have been carved. In this case, the fluorescent motifs (301) originate due to the selective deposition of the fluorescent material in the areas of the substrate (400) not covered by the mask (202), as shown in Figure 6. These fluorescent motifs (301) may be protected by subsequent deposition of a layer made of another material that is transparent and resistant to abrasion,

### * Marking by plasma abrasion and using masks.

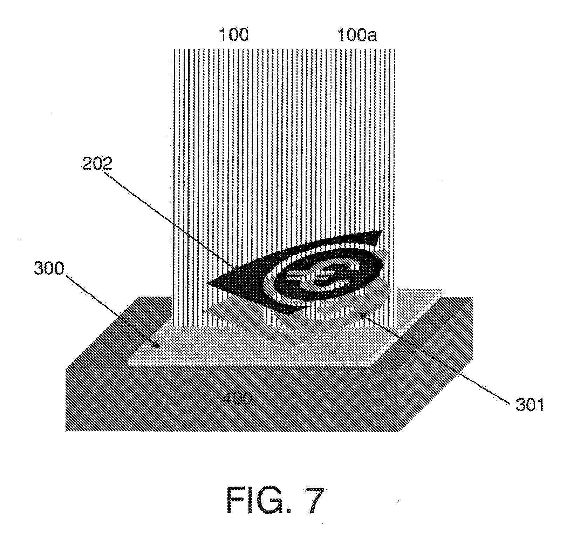

In this marking method, shown in Figure 7, once the fluorescent layer (300) is formed, it is exposed to a plasma (100) (of oxygen, fluorinated compounds or similar, of great abrasion capacity) through a mask (202). This eliminates the motifs (301) written in the mask resulting in a structure that would be the negative of the designed according to the laser (101) internal marking process, or the previous one of selective deposition through masks (202), provided that the mask used was the same.

### * Marking by ultraviolet light through a mask.

In this marking method, similar to that described above, the fluorescent layer (300) is exposed to a beam of ultraviolet light (100a), thus eliminating the optical activity of the illuminated areas leading to a structure that would be the negative of the designed by the internal laser marking (101) process, or the selective deposition through masks (202), provided that the mask used was the same. Regarding the previous process that used a mask and plasma, the difference is that in this case there is no ablation of the layer material but simply the elimination of its fluorescence and colour in the illuminated areas.

### * Multilayer system or other interferometer structures of several dyes incorporating some or several of the previous marking processes.

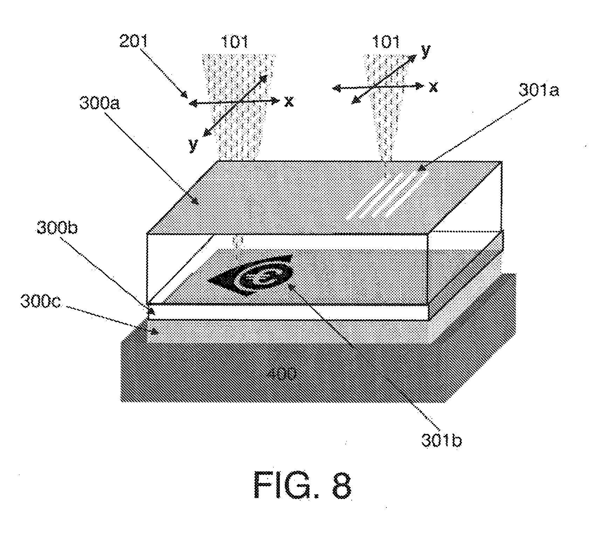

The versatility of the process object of the invention is such that allows the development of multilayer systems, as shown in Figure 8, formed by superimposing a series of layers of different fluorescent materials (300a, 300b and 300c), being able to "write" the appropriate motifs (301 a and 301 b) on each of the individual layers using any of the processes described above. Furthermore, the interferometer properties of the multilayer system and the dyes can be exploited to obtain different colours and a visual aspect hardly obtained with other techniques.

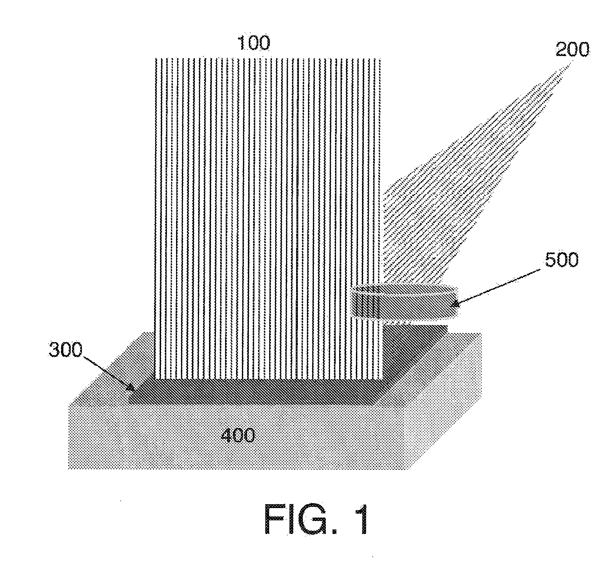

The following describes an application example for the creation of a hydroxyflavone motif by plasma deposition (100) on a glass substrate (400). Obtaining hydroxyflavone polymer layers is performed by the method described in Figure 1, and the marking of different motifs (301) on them is performed by laser writing as shown in Figure 2 and through the use of masks (202) during the layer deposition process itself, as shown in Figure 7.

In a first stage, deposition by a plasma reactor (100) of the hydroxyflavone dye layer is described:

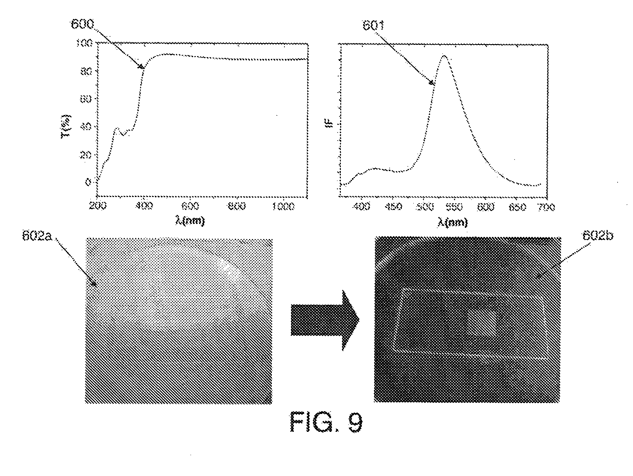

For the deposition of the polymer layer, hydroxyflavone that was evaporated (200) in vacuum (P <10⁻⁴ bar) by heat sublimation in an adequate crucible heated at temperature intervals between 50 and 450 ° C, was used. The evaporator was focused on a substrate (400), as shown in Figure 1, while a plasma (100) of Ar or other gas was sent to it working in remote configuration at a pressure lower than 10 ⁻⁴ bar. The deposition process was controlled by a quartz sensor (500) located next to the substrate (400). In this case, the thickness of the deposited layer, measured with the quartz sensor (500) was about 150nm, optimal thickness to later proceed with its marking by laser (101) without damaging the substrate (400). In the examples described, the layers were grown on flat glass and silicon substrates (400), the results in Figure 9 correspond to the layer grown on glass where it is easier to visually observe without the aid of any optical instrument the fluorescence effects of the deposited layer. It should be noted that the process is compatible with any other type of material and shape of the substrates (400), provided they are stable under the vacuum conditions that must be used during the process of preparation of the fluorescent layer (300). It should also be noted that in case of substrates (400) not stable in vacuum, the method could also be applied by lowering the temperature of the substrates (400) during the layer deposition process.

The features and optical performance of the layers prepared by this process are illustrated in Figure 9. It can be seen that the layer is completely transparent in the visible (602a), however, absorbing in the ultraviolet area of the spectrum (600) for λ<400nm wavelengths, as shown in the first table in Figure 9. It is also shown that when this layer is illuminated with ultraviolet light it results in a spectrum (601) that presents two peaks of fluorescence intensity (IF) for wavelengths λ=420nm and λ=530nm, as shown in the second table in Figure 9. This fluorescence spectrum (601) results in the layer having an intense greenish appearance when viewed with the naked eye (602b).

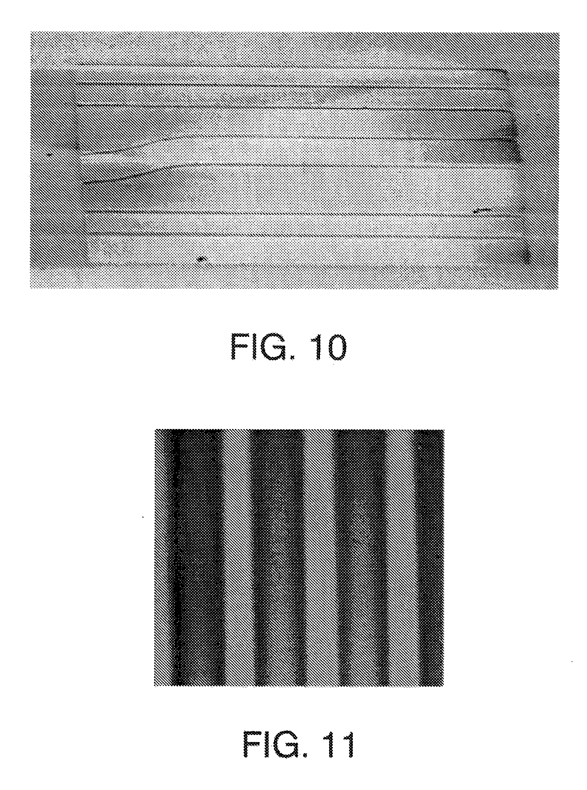

The second stage describes the process of marking the desired motifs in the fluorescent polymer layer:
The incorporation of motifs (301) on the layers can be made by any of the processes already described in Figures 2-8. As a concrete example of application, in this case the possibility of using the method of laser ablation (101) carving directly on the surface of the layer the number of desired motifs (301) is shown (Figure 2). Figure10 shows an image of SEM electron microscopy of a fluorescent polymeric layer (300) where a series of lines with a thickness of 5 micrometers (400) have been carved by laser ablation (101).

Another example of incorporating fluorescent motifs (301) was performed by using masks (202) during the deposition process of the layer (Figure 7). The result obtained is illustrated in Figure 11 which shows an image obtained with a fluorescence microscope on a superficial structure where tracks with fluorescent layers and others that don't have it have grown by the process described in Figure 7. In a fluorescence microscope those motifs (301) or areas that emit light are detected, differentiating them from the motifs (301) or areas where there is not fluorescent material. In Figure 11, the tracks represented with the lighter colour are the ones containing the fluorescent material as a layer, the other areas correspond to regions of substrate (400) covered by the mask (202) according to the process in Figure 7 and therefore contain no fluorescent material on them.

## Claims

1. Process for marking, encryption, labelling and non-destructive optical encoding **characterized in that** it comprises the deposition on a substrate (400), of at least one fluorescent polymer layer (300) with a thickness between tens and several hundreds of nanometers through plasma polymerization (100) of dye molecules and through marking of motifs (301).

2. Process according to claim 1, **characterized in that** the marking of the motifs (301) is performed by a laser (101), using an ablation process that is selected from a group consisting of: ablation by movement of the focal point, ablation by direct projection through a conventional mask (202), ablation through a diffractive mask (203) and focus adjustment and control of the focal point that moves defining the shape of the marked motif (301) in the inner areas of the layer (300).

3. Process according to claim 1, **characterized in that** the marking of motifs (301) is performed by using a mask (202), during the layer's (300) growing process.

4. Process according to claim 1, **characterized in that** the marking of motifs (301) is performed by a process which is selected between: selective abrasion of the formed layer (300) using a mask (202) and illumination with ultraviolet light through a mask (202).

5. Process according to claim 2, **characterized in that** the marking of motifs (301) is performed on different layers (300) and therefore, they can contain superimposed coded information.

6. Process according to any of claims 1-4, **characterized in that** the fluorescent polymer layer (300) absorbs in the ultraviolet (UV) area and emits in the visible and/or infrared (IR) or absorbs in the visible and emits fluorescence in the visible and/or infrared (IR).

7. Process according to claim 6, **characterized in that** the motifs (301) engraved in the fluorescent polymer layers (300) that absorb in the ultraviolet (UV) area and emit in the visible can be observed in the visible and/or infrared (IR) illuminating the layer with ultraviolet light.

8. Process according to claim 6, **characterized in that** in the fluorescent polymer layers (300) that absorb light in the visible area, the coloured layer can re-emit light in another wavelength different from the one of excitation.

9. Process according to any of claims 1-8, **characterized in that** the substrate (400) is a sensitive substrate (400).

10. Process according to claim 9, **characterized in that** the substrate is selected among the group consisting of: paper and plastic.

11. Process according to any of claims 1-8, **characterized in that** the substrate (400) is a stable and robust substrate (400).

12. Process according to claim 11, **characterized in that** the substrate (400) is selected among the group consisting of: ceramic, glass and metal.

13. Process according to any of the previous claims, **characterized in that** the shape of the surface of the substrate (400) is flat.

14. Process according to any of claims 1-13, **characterized in that** the shape of the surface of the substrate (400) is round.

15. Process according to any of the previous claims, **characterized in that** the size and shape of the motifs (301) is micrometer.

16. Process according to any of claims 1-14, **characterized in that** the size and shape of the motifs (301) is macrometer.

## Patentansprüche

1. Verfahren zur Markierung, Verschlüsselung, Kennzeichnung und nicht zerstörenden optischen Kodierung, **dadurch gekennzeichnet, dass** es die Ablagerung von mindestens einer fluoreszierenden Polymerschicht (300) mit einer Dicke von Zehnern bis mehreren Tausend Nanometern auf ein Substrat (400) durch Plasmapolymerisation (100) von Farbmolekülen und durch Markierung der Motive (301) umfasst.

2. Verfahren nach Anspruch 1, **dadurch gekennzeichnet, dass** die Markierung der Motive (301) mit einem Laser (101) durchgeführt wird, unter Verwendung eines Ablationsverfahrens, das ausgewählt wird aus der Gruppe bestehend aus: Ablation durch Bewegung des Brennpunkts, Ablation durch direkte Projektion durch eine herkömmliche Maske (202), Ablation durch eine Beugungsmaske (203) und Fokuseinstellung und Kontrolle des Brennpunkts, der sich so bewegt, dass er die Form des markierten Motivs (301) in den inneren Bereichen der Schicht (300) definiert.

3. Verfahren nach Anspruch 1, **dadurch gekennzeichnet, dass** die Markierung der Motive (301) unter Verwendung einer Maske (202) während des Wachstumsprozesses der Schicht (300) durchgeführt wird.

4. Verfahren nach Anspruch 1, **dadurch gekennzeichnet, dass** die Markierung der Motive (301) mittels einem Verfahren durchgeführt wird, das ausgewählt wird aus: einem gezielten Abrieb der gebildeten Schicht (300) unter Verwendung einer Maske (202) und Beleuchtung mit ultraviolettem Licht durch eine Maske (202).

5. Verfahren nach Anspruch 2, **dadurch gekennzeichnet, dass** die Markierung der Motive (301) auf verschiedenen Schichten (300) durchgeführt wird, die daher eine überlagerte kodierte Information enthalten können.

6. Verfahren nach einem der Ansprüche 1 bis 4, **dadurch gekennzeichnet, dass** die fluoreszierende Polymerschicht (300) im ultravioletten (UV) Bereich absorbiert und im sichtbaren und/oder infraroten (IR) Bereich emittiert oder im sichtbaren Bereich absorbiert und im sichtbaren und/oder infraroten (IR) Bereich fluoresziert.

7. Verfahren nach Anspruch 6, **dadurch gekennzeichnet, dass** die Motive (301), die in die fluoreszierenden Polymerschichten (300), die im ultravioletten (UV) Bereich absorbieren und im sichtbaren Bereich emittieren, eingeätzt sind, im sichtbaren und/oder infraroten (IR) Bereich durch Beleuchtung der Schicht mit ultraviolettem Licht beobachtet werden können.

8. Verfahren nach Anspruch 6, **dadurch gekennzeichnet, dass** in den fluoreszierenden Polymerschichten (300), die Licht im sichtbaren Bereich absorbieren, die farbige Schicht Licht einer anderen Wellenlänge, die sich von der der Erregung unterscheidet, re-emittieren kann.

9. Verfahren nach einem der Ansprüche 1 bis 8, **dadurch gekennzeichnet, dass** das Substrat (400) ein empfindliches Substrat (400) ist.

10. Verfahren nach Anspruch 9, **dadurch gekennzeichnet, dass** das Substrat ausgewählt wird aus der Gruppe bestehend aus: Papier und Kunststoff.

11. Verfahren nach einem der Ansprüche 1 bis 8, **dadurch gekennzeichnet, dass** das Substrat (400) ein stabiles und robustes Substrat (400) ist.

12. Verfahren nach Anspruch 11, **dadurch gekennzeichnet, dass** das Substrat (400) ausgewählt wird aus der Gruppe bestehend aus: Keramik, Glas und Metall.

13. Verfahren nach einem der vorangegangenen Ansprüche, **dadurch gekennzeichnet, dass** die Form der Oberfläche des Substrats (400) flach ist.

14. Verfahren nach einem der Ansprüche 1 bis 13, **dadurch gekennzeichnet, dass** die Form der Oberfläche des Substrats (400) rund ist.

15. Verfahren nach einem der vorangegangenen Ansprüche, **dadurch gekennzeichnet, dass** die Größe und die Form der Motive (301) im Mikrometerbereich liegen.

16. Verfahren nach einem der Ansprüche 1 bis 14, **dadurch gekennzeichnet, dass** die Größe und die Form der Motive (301) im Makrometerbereich liegen.

## Revendications

1. Procédé de marquage, cryptage, étiquetage et codage optique non destructif, **caractérisé en ce qu'**il comprend le dépôt sur un substrat (400), d'au moins une couche polymère fluorescente (300) avec une épaisseur comprise entre quelques dizaines et quelques centaines de nanomètres par polymérisation plasma (100) de molécules de colorant et par marquage de motifs (301).

2. Procédé selon la revendication 1, **caractérisé en ce que** le marquage des motifs (301) est effectué par un laser (101), en utilisant un procédé d'ablation qui est sélectionné à partir d'un groupe composé de : ablation par déplacement du point focal, ablation par projection directe à travers un masque classique (202), ablation à travers un masque de diffraction (203) et mise au point et contrôle du point focal qui se déplace définissant la forme du motif marqué (301) dans les zones intérieures de la couche (300).

3. Procédé selon la revendication 1, **caractérisé en ce que** le marquage des motifs (301) est effectué en utilisant un masque (202), pendant le processus de croissance de la couche (300).

4. Procédé selon la revendication 1, **caractérisé en ce que** le marquage des motifs (301) est effectué par un processus qui est sélectionné entre : abrasion sélective de la couche formée (300) en utilisant un masque (202) et éclairage par lumière ultraviolette à travers un masque (202).

5. Procédé selon la revendication 2, **caractérisé en ce que** le marquage des motifs (301) est effectué sur différentes couches (300), et donc ils peuvent contenir des informations codées superposées.

6. Procédé selon l'une quelconque des revendications 1 à 4, **caractérisé en ce que** la couche polymère fluorescente (300) absorbe dans le domaine ultraviolet (UV) et émet dans le visible et / ou l'infrarouge (IR) ou absorbe dans le visible et émet de la fluorescence dans le visible et / ou l'infrarouge (IR).

7. Procédé selon la revendication 6, **caractérisé en ce que** les motifs (301) gravés dans les couches polymères fluorescentes (300), qui absorbent dans le domaine ultraviolet (UV) et émettent dans le visible, peuvent être observés dans le visible et / ou l'infrarouge (IR) en éclairant la couche avec une lumière ultraviolette.

8. Procédé selon la revendication 6, **caractérisé en ce que** dans les couches polymères fluorescentes (300) qui absorbent la lumière dans le domaine visible, la couche colorée peut réémettre de la lumière à une autre longueur d'onde différente de celle d'excitation.

9. Procédé selon l'une quelconque des revendications 1 à 8, **caractérisé en ce que** le substrat (400) est un substrat sensible (400).

10. Procédé selon la revendication 9, **caractérisé en ce que** le substrat est choisi parmi le groupe composé de : papier et plastique.

11. Procédé selon l'une quelconque des revendications 1 à 8, **caractérisé en ce que** le substrat (400) est un substrat stable et robuste (400).

12. Procédé selon la revendication 11, **caractérisé en ce que** le substrat (400) est choisi parmi le groupe composé de : céramique, verre et métal.

13. Procédé selon l'une quelconque des revendications précédentes, **caractérisé en ce que** la forme de la surface du substrat (400) est plate.

14. Procédé selon l'une quelconque des revendications 1 à 13, **caractérisé en ce que** la forme de la surface du substrat (400) est ronde.

15. Procédé selon l'une quelconque des revendications précédentes, **caractérisé en ce que** la taille et la forme des motifs (301) est micrométrique.

16. Procédé selon l'une quelconque des revendications 1 à 14, **caractérisé en ce que** la taille et la forme des motifs (301) est macrométrique.
